# EUROPEAN PATENT SPECIFICATION

(11) **EP 2 455 746 B1**
(45) Date of publication and mention of the grant of the patent: **15.08.2018**
(21) Application number: 11189884.7
(22) Date of filing: 21.11.2011
(51) Int. Cl.: G01N 21/77, G01N 21/64, G01N 31/22

(54) **Photoluminescent oxygen probe with reduced cross-sensitivity to humidity**
Fotolumineszente Sauerstoffsonde mit reduzierter Querempfindlichkeit auf Feuchtigkeit
Sonde d'oxygène photo-luminescente avec sensibilité transversale réduite à l'humidité

(30) Priority: 19.11.2010 US 950027
(43) Date of publication of application: 23.05.2012
(73) Proprietor: Mocon, Inc., Minneapolis, Minnesota 55428 (US)
(72) Inventor: Mayer, Daniel W., Wyoming, MN 55092 (US)
(74) Representative: Vossius & Partner Patentanwälte Rechtsanwälte mbB

(56) References cited:
- US-A1- 2003 068 827
- PAPKOVSKY D B ET AL: "Biosensors on the basis of luminescent oxygen sensor: the use of microporous light-scattering support materials", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, vol. 51, no. 1-3, 31 August 1998 (1998-08-31), pages 137-145, XP004154000, ISSN: 0925-4005, DOI: 10.1016/S0925-4005(98)00171-3
- O'MAHONY F C ET AL: "Non-destructive assessment of oxygen levels in industrial modified atmosphere packaged cheddar cheese", FOOD CONTROL, BUTTERWORTH, LONDON, GB, vol. 17, no. 4, 1 April 2006 (2006-04-01), pages 286-292, XP024961702, ISSN: 0956-7135, DOI: 10.1016/J.FOODCONT.2004.10.013 [retrieved on 2006-04-01]
- M. FITZGERALD ET AL: "Nondestructive Monitoring of Oxygen Profiles in Packaged Foods Using Phase-Fluorimetric Oxygen Sensor", JOURNAL OF FOOD SCIENCE, vol. 66, no. 1, 1 January 2001 (2001-01-01), pages 105-110, XP55023695, ISSN: 0022-1147, DOI: 10.1111/j.1365-2621.2001.tb15590.x
- YUTAKA AMAO: "Probes and Polymers for Optical Sensing of Oxygen", MICROCHIMICA ACTA ; AN INTERNATIONAL JOURNAL ON MICRO AND TRACEANALYSIS, SPRINGER-VERLAG, VI, vol. 143, no. 1-2, 22 August 2003 (2003-08-22), pages 1-12, XP002426220, ISSN: 1436-5073, DOI: 10.1007/S00604-003-0037-X

## Description

### BACKGROUND

Solid-state polymeric materials based on oxygen-sensitive photoluminescent dyes are widely used as optical oxygen sensors and probes. See, for example United States Published Patent Applications 2009/0029402, 2008/8242870, 2008/215254, 2008/199360, 2008/190172, 2008/148817, 2008/146460, 2008/117418, 2008/0051646, 2006/0002822, 7,569,395, 7,534,615, 7,368,153, 7,138,270, 6,689,438, 5,718,842, 4,810,655, and 4,476,870. Such optical sensors are available from a number of suppliers, including Presens Precision Sensing, GmbH of Regensburg, Germany, Oxysense of Dallas, Texas, United States, and Luxcel Biosciences, Ltd of Cork, Ireland.

To increase photoluminescent signals obtainable from the sensor and thus increase the reliability of optical measurements, oxygen-sensitive materials often incorporate a light-scattering additive (*e*.*g*., TiO2 - Klimant I., Wolfbeis O.S. - Anal Chem, 1995, v.67, p.3160-3166) or underlayer (*e*.*g*., microporous support - see Papkovsky, DB et al.- Sensors Actuators B, 1998, v.51, p.137-145). Unfortunately, such probes tend to show significant cross-sensitivity to humidity, preventing them from gaining wide acceptance for use in situations where humidity of the samples under investigation cannot be controlled. The review article by Amao, Y., Probes and Polymers for Optical Sensing of Oxygen, Microchim. Acta 143 (2003), 1-12, lists several Zn²⁺ prophyrins, among them Zn²⁺ tetrabenzoporphyrin (ZnTBP), immobilized in a polystyrene film as suitable optical probes for oxygen sensing based on the lifetime change in the T-T absorption. O'Mahoney, F. C. et al., Non-destructive assessment of oxygen levels in industrial modified atmosphere packaged cheddar cheese, Food Control 17 (2006), 286-292, describes an optical oxygen sensor based on a solution of platinum octaethylporphine-ketone (PtOEPK) dissolved in ethylacetate applied to a filter paper and left to dry. This sensor is used for monitoring residual oxygen in industrial modified atmosphere packaged cheddar cheese. Fitzgerald, M. et al., Nondestructive Monitoring of Oxygen Profiles in Packaged Foods Using Phase-Fluorimetric Oxygen Sensor Journal of Food Science 66 (2001), 105-110, discloses an oxygen sensor based on PtOEPK dye and polystyrene dissolved in toluene or ethylacetate. The solution is applied to Durapore filter membranes and left to dry. The sensor is used for monitoring oxygen profiles in vacuum-packed meat.

Hence, a need exists for an optical photoluminescent oxygen probe with reduced cross-sensitivity to humidity.

### SUMMARY OF THE INVENTION

A first aspect of the invention is an oxygen-sensitive luminescent element comprising a binder-free glass fiber carrier substrate bearing a tetrabenzoporphyrin oxygen-sensitive photoluminescent dye embedded within an oxygen-permeable hydrophobic polymer matrix.

A second aspect of the invention is an oxygen-sensitive probe comprising the luminescent element of the first aspect laminated onto a structural support layer. The luminescent element is preferably laminated to the structural support layer as a solid state composition, wherein the solid state composition comprises the oxygen-sensitive photoluminescent dye embedded within an oxygen-permeable hydrophobic polymer matrix.

A third aspect of the invention is a method for measuring oxygen concentration within an enclosed space employing an oxygen-sensitive probe according to the second aspect of the invention. The method includes the steps of (a) obtaining an oxygen-sensitive probe according to the second aspect of the invention, (b) placing the probe within the enclosed space, and (c) ascertaining oxygen concentration within the enclosed space by: (i) taking luminescence measurements by (A) repeatedly exposing the probe to excitation radiation over time, and (B) measuring radiation emitted by the excited probe after at least some of the exposures, (ii) measuring passage of time between luminescence measurements, and (iii) converting at least some of the measured emissions to an oxygen concentration based upon a known conversion algorithm.

A fourth aspect of the invention is a method for monitoring changes in oxygen concentration within an enclosed space employing an oxygen-sensitive probe according to the second aspect of the invention. The method includes the steps of (a) obtaining an oxygen-sensitive probe according to the second aspect of the invention, (b) placing the probe within the enclosed space, (c) ascertaining oxygen concentration within the enclosed space over time by: (i) taking luminescence measurements by (A) repeatedly exposing the probe to excitation radiation over time, and (B) measuring radiation emitted by the excited probe after at least some of the exposures, (ii) measuring passage of time between luminescence measurements, and (iii) converting at least some of the measured emissions to an oxygen concentration based upon a known conversion algorithm, and (d) reporting at least one of (i) at least two ascertained oxygen concentrations and the time interval between those reported concentrations, and (ii) a rate of change in oxygen concentration within the enclosed space calculated from data obtained in step (c).

A fifth aspect of the invention is a method of preparing a luminescent element according to the first aspect of the invention. The method includes the steps of (a) preparing a coating cocktail which contains the tetrabenzoporphyrin oxygen-sensitive photoluminescent dye and the oxygen-permeable hydrophobic polymer in an organic solvent, (b) applying the cocktail to a first major surface of the binder-free glass fiber carrier substrate, and (c) allowing the cocktail to dry, whereby a solid-state thin film coating is formed on the binder-free glass fiber carrier substrate to form the luminescent element.

A sixth aspect of the invention is a method of preparing a photoluminescent oxygen-sensitive probe according to the second aspect of the invention. The method includes the steps of (A) preparing a luminescent element in accordance with the fifth aspect of the invention, and, (B) laminating the luminescent element onto the first major surface of a structural support layer.

### BRIEF DESCRIPTION OF THE DRAWINGS

Figure 1 is an enlarged top view of one embodiment of the invention.
Figure 2 is a side view of invention depicted in Figure 1.
Figure 2A is an enlarged side view of a central portion of the invention depicted in Figure 2.
Figure 2B is a microscopically enlarged side view of the luminescent component of the invention depicted in Figure 2.
Figure 2C is a cross-sectional view of one fibril depicted in Figure 2B.

### DETAILED DESCRIPTION OF A PREFERRED EMBODIMENT

### Definitions

As used herein, including the claims, the phrase **"*near 100% relative humidity*"** means humidity as close as reasonably possible to 100% without condensation.

As used herein, including the claims, the phrase **"*oxygen permeable*"** means a material that when formed into a 1 mil film has an oxygen transmission rate of greater than 1,000 c³/m2 day when measured in accordance with ASTM D 3985.

### Nomenclature

- **10**: Oxygen Sensitive Probe
- **20**: Luminescent Element
- **21**: Oxygen-Sensitive Photoluminescent Dye
- **22**: Oxygen-Permeable Polymer Matrix
- **23**: Carrier Substrate
- **24**: Individual Fibril of Carrier Substrate
- **24'**: Coated Individual Fibril of Carrier Substrate
- **30**: Pressure Sensitive Adhesive Layer
- **40**: Structural Support Layer
- **40a**: First or Upper Major Surface of Structural Support Layer
- **40b**: Second or Lower Major Surface of Structural Support Layer

### Construction

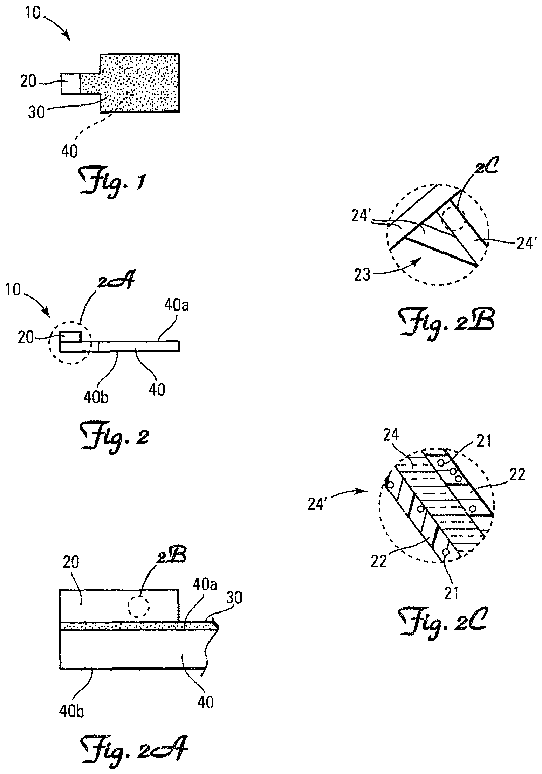

Referring generally to Figures 1 and 2, a first aspect of the invention is an oxygen-sensitive probe or sensor **10** useful for optically measuring oxygen concentration within an enclosed space (not shown), such as the retention chamber (not shown) of a hermetically sealed package (not shown). The probe **10** includes a luminescent element **20** laminated onto a structural support layer **40.**

Referring to Figures 2A-2C, the luminescent element **20** includes a glass fiber carrier substrate **23** bearing an oxygen-sensitive photoluminescent dye **21.** According to the invention, the glass fiber carrier substrate is binder-free. The oxygen-sensitive photoluminescent dye **21** is embedded within an oxygen-permeable polymer matrix **22.** Referring to Figure 2C, but without intending to be unduly limited thereby, it is believed that the compounded photoluminescent dye **21** and oxygen-permeable polymer matrix **22** penetrate into the interstitial void volume of the glass fiber carrier substrate **23** and coat the individual fibrils **24** of the carrier substrate **23** to form coated fibrils **24'.**

According to the invention, the oxygen-sensitive photoluminescent dye **21** is a tetrabenzoporphyrin, such as phosphorescent metallocomplexes of tetrabenzoporphyrins.

According to the invention, the hydrophobic oxygen-sensitive photoluminescent dye **21** is compounded with a suitable oxygen-permeable and hydrophobic polymer matrix **22.** Again, one of routine skill in the art is capable of selecting a suitable oxygen-permeable hydrophobic polymer matrix **22** based upon the intended use of the probe **10** and the selected dye **21.** A nonexhaustive list of suitable polymers for use as the oxygen-permeable hydrophobic carrier matrix **22** includes specifically, but not exclusively, polystryrene, polycarbonate, polysulfone, polyvinyl chloride and some co-polymers.

The glass fiber carrier substrate **23** is a glass fiber sheet, preferably a glass fiber filter with first and second major surfaces (unnumbered). Such materials, when employed as the carrier for the oxygen-sensitive photoluminescent dye **21,** substantially reduces cross-sensitivity of the luminescent element **20** to humidity relative to other probes **10.** Suitable binder-free glass fiber filter discs are widely available from a number of sources including specifically, but not exclusively, Millipore Corporation of Bedford, Massachusetts under the designations (APFA, APFB, APFC, APFD, APFF and AP40 for binder-free filters), Zefon International, Inc. of Oscala, Florida (IW-AH2100, IW-A2100, IW-AE2100, IW-B2100, IW-C2100, IW-D2100, IW-E2100 and IW-F2100 for binder-free filters) and Pall Corporation of Port Washington, New York (A/B, A/C A/D and A/E for binder-free filters).

The glass fiber carrier substrate **23** preferably has a thickness of between 100 µm and 5,000 µm, most preferably between 200 µm and 2,000 µm.

The structural support layer **40** may be selected from any material possessing sufficient structural integrity to physically support the luminescent element **20** and capable of withstanding extended exposure to the environment into which the probe **10** is to be used (e.g., high humidity, low humidity, submerged in water, submerged in an acidic solution, etc). Materials suitable for use as the structural support layer **40,** dependent of course upon the environment into which the probe **10** is to be used, include specifically but not exclusively, cellulosics such as paper, wax paper, cardstock, cardboard, wood and wood laminates; plastics such polyethylene, polypropylene and polyethylene terephthalate; metals such as aluminum sheets, aluminum foil, steel and tin; woven and unwoven fabrics; glass; and various combinations and composites thereof such a mylar.

Referring to Figure 2A, the probe **10** preferably includes a layer of a pressure sensitive adhesive **30** on the first major surface **40a** of the structural support layer **40** for securing the luminescent element **20** onto the structural support layer **40** and facilitating attachment of the probe **10** to a surface (not shown) of a container (not shown) that defines the enclosed space (not shown) whose oxygen concentration is to be measured, with the luminescent element **20** on the probe **10** facing outward from the container (not shown) through an area of the container (not shown) that is transparent or translucent to radiation at the excitation and emission wavelengths of the dye **21** in the luminescent element **20.** The adhesive **30** may but should not cover the luminescent element **20.**

The probes **10** and luminescent elements **20** of the present invention have little cross-sensitivity to humidity, with a change of luminescence lifetime, at a constant O₂ concentration, of less than 5% with a change in relative humidity of an analyte gas from 0% to near 100%.

### Manufacture

The luminescent element **20** can be manufactured by the traditional methods employed for manufacturing such elements **20.** Briefly, the luminescent element **20** can be conveniently manufactured by (A) preparing a coating cocktail (not shown) which contains the photoluminescent oxygen-sensitive dye **21** and the oxygen-permeable polymer **22** in an organic solvent (not shown) such as ethylacetate, (B) applying the cocktail to at least the first major surface (unnumbered) of a glass fiber carrier substrate **23,** such as by dunking the glass fiber carrier substrate **23** in the cocktail (not shown), and (C) allowing the cocktail (not shown) to dry, whereby a solid-state thin film coating is formed on the glass fiber carrier substrate **23** to form the luminescent element **20.**

Generally, the concentration of the polymer **22** in the organic solvent (not shown) should be in the range of 0.1 to 20% w/w, with the ratio of dye **21** to polymer **22** in the range of 1:20 to 1:10,000 w/w, preferably 1:50 to 1:5,000 w/w.

The probe **10** can be manufactured from the luminescent element **20** by laminating the luminescent element **20** onto the first major surface **40a** of the structural support layer **40.**

The luminescent element **20** is preferably adhesively laminated to the structural support layer **40.** For most applications, the layer of pressure sensitive adhesive **30** is preferably coated over the entire first major surface **40a** of the support material **40** using conventional coating techniques, so that the exposed pressure sensitive adhesive **30** can be used to adhesively attach the probe **10** to a sidewall of a container (not shown) with the luminescent element **20** facing the sidewall for subsequent interrogation by a reader (not shown) through the sidewall (not shown).

### Use

The probe **10** can be used to quickly, easily, accurately and reliably measure oxygen concentration within an enclosed space (not shown) regardless of the relative humidity within the enclosed space (not shown). The probe **10** can be used to measure oxygen concentration in the same manner as other oxygen sensitive photoluminescent probes. Briefly, the probe **10** is used to measure oxygen concentration within an enclosed space (not shown) by (A) placing the probe **10** within the enclosed space (not shown) at a location where radiation at the excitation and emission wavelengths of the dye **21** can be transmitted to and received from the luminescent element **20** with minimal interference and without opening or otherwise breaching the integrity of the enclosure, and (B) ascertaining the oxygen concentration within the enclosed space (not shown) by (i) repeatedly exposing the probe **10** to excitation radiation over time, (ii) measuring radiation emitted by the excited probe **10** after at least some of the exposures, (iii) measuring passage of time during the repeated excitation exposures and emission measurements, and (iv) converting at least some of the measured emissions to an oxygen concentration based upon a known conversion algorithm. Such conversion algorithms are well know to and readily developable by those with routine skill in the art.

In a similar fashion, the probe **10** can be used to quickly, easily, accurately and reliably monitor changes in oxygen concentration within an enclosed space (not shown) regardless of the relative humidity within the enclosed space (not shown). The probe **10** can be used to monitor changes in oxygen concentration in the same manner as other oxygen sensitive photoluminescent probes. Briefly, the probe **10** is used to monitor changes in oxygen concentration within an enclosed space (not shown) by (A) placing the probe **10** within the enclosed space (not shown) at a location where radiation at the excitation and emission wavelengths of the dye **21** can be transmitted to and received from the luminescent element **20** with minimal interference and without opening or otherwise breaching the integrity of the enclosure, (B) ascertaining the oxygen concentration within the enclosed space (not shown) over time by (i) repeatedly exposing the probe **10** to excitation radiation over time, (ii) measuring radiation emitted by the excited probe **10** after at least some of the exposures, (iii) measuring passage of time during the repeated excitation exposures and emission measurements, and (iv) converting at least some of the measured emissions to an oxygen concentration based upon a known conversion algorithm, and (C) reporting at least one of (i) at least two ascertained oxygen concentrations and the time interval between those reported concentrations, and (ii) a rate of change in oxygen concentration within the enclosed space calculated from data obtained in step (B). Conversion algorithms used to convert the measured emissions to an oxygen concentration are well know to and readily developable by those with routine skill in the art.

The radiation emitted by the excited probe **10** can be measured in terms of intensity and/or lifetime (rate of decay, phase shift or anisotropy), with measurement of lifetime generally preferred as a more accurate and reliable measurement technique when seeking to establish oxygen concentration via measurement of the extent to which the dye **21** has been quenched by oxygen.

## Claims

1. An oxygen-sensitive luminescent element (20) comprising a binder-free glass fiber carrier substrate (23) bearing a tetrabenzoporphyrin oxygen-sensitive photoluminescent dye (21) embedded within an oxygen-permeable hydrophobic polymer matrix (22).

2. The luminescent element (20) of claim 1 wherein the oxygen-permeable hydrophobic polymer matrix (22) is selected from the group consisting of polystyrene, polycarbonate, polysulfone, and polyvinyl chloride.

3. The luminescent element (20) of claim 1 wherein the glass fiber carrier substrate (23) is a sheet between 100 µm and 5,000 µm thick.

4. An oxygen-sensitive probe (10) comprising the luminescent element (20) of any of claims 1 to 3 laminated onto a structural support layer (40).

5. The oxygen-sensitive probe (10) of claim 4 further comprising a layer of a pressure-sensitive adhesive (30) on a first major surface (40a) of the structural support layer (40) whereby the adhesive layer (30) is sandwiched between the structural support layer (40) and the luminescent element (20).

6. A method for measuring oxygen concentration within an enclosed space, comprising the steps of:
(a) obtaining an oxygen-sensitive probe (10) according to claim 4 or 5,
(b) placing the probe (10) within the enclosed space, and
(c) ascertaining oxygen concentration within the enclosed space by:
(i) taking luminescence measurements by (A) repeatedly exposing the probe (10) to excitation radiation over time, and (B) measuring radiation emitted by the excited probe (10) after at least some of the exposures,
(ii) measuring passage of time between luminescence measurements, and
(iii) converting at least some of the measured emissions to an oxygen concentration based upon a known conversion algorithm.

7. A method for monitoring changes in oxygen concentration within an enclosed space, comprising the steps of:
(a) obtaining an oxygen-sensitive probe (10) according to claim 4 or 5,
(b) placing the probe (10) within the enclosed space,
(c) ascertaining oxygen concentration within the enclosed space over time by:
(i) taking luminescence measurements by (A) repeatedly exposing the probe (10) to excitation radiation over time, and (B) measuring radiation emitted by the excited probe (10) after at least some of the exposures,
(ii) measuring passage of time between luminescence measurements, and
(iii) converting at least some of the measured emissions to an oxygen concentration based upon a known conversion algorithm, and
(d) reporting at least one of (i) at least two ascertained oxygen concentrations and the time interval between those reported concentrations, and (ii) a rate of change in oxygen concentration within the enclosed space calculated from data obtained in step (c).

8. The method of claim 6 or 7, wherein the enclosed space is a retention chamber of a hermetically sealed package.

9. A method of preparing the luminescent element (20) of claim 1, which includes at least the steps of:
(a) preparing a coating cocktail which contains the tetrabenzoporphyrin oxygen-sensitive photoluminescent dye (21) and the oxygen-permeable hydrophobic polymer in an organic solvent,
(b) applying the cocktail to a first major surface of the binder-free glass fiber carrier substrate (23), and
(c) allowing the cocktail to dry, whereby a solid-state thin film coating is formed on the binder-free glass fiber carrier substrate (23) to form the luminescent element (20).

10. The method of claim 9 wherein the cocktail is applied to the first major surface of the binder-free glass fiber carrier substrate (23) by dipping the binder-free glass fiber carrier substrate (23) into a supply of the cocktail.

11. The method of claim 9 wherein the concentration of the polymer in organic solvent is in the range of 0.1 to 20% w/w and the dye:polymer ratio is in the range of 1:20 to 1:10,000 w/w.

12. A method of preparing a photoluminescent oxygen-sensitive probe (10) comprising the steps of:
(a) preparing a luminescent element (20) in accordance with claim 9, and
(b) laminating the luminescent element (20) onto the first major surface (40a) of a structural support layer (40).

## Patentansprüche

1. Ein sauerstoffempfindliches lumineszierendes Element (20), umfassend ein bindemittelfreies Glasfaser-Trägersubstrat (23), das einen sauerstoffempfindlichen photolumineszierenden Tetrabenzoporphyrin-Farbstoff (21) trägt, der in eine sauerstoffdurchlässige hydrophobe Polymermatrix (22) eingebettet ist.

2. Das lumineszierende Element (20) gemäß Anspruch 1, wobei die sauerstoffdurchlässige hydrophobe Polymermatrix (22) ausgewählt ist aus der Gruppe bestehend aus Polystyrol, Polycarbonat, Polysulfon und Polyvinylchlorid.

3. Das lumineszierende Element (20) gemäß Anspruch 1, wobei das Glasfaser-Trägersubstrat (23) ein Flächengebilde mit einer Dicke zwischen 100 µm und 5.000 µm ist.

4. Eine sauerstoffempfindliche Sonde (10), umfassend das lumineszierende Element (20) gemäß einem der Ansprüche 1 bis 3, das auf eine strukturelle Trägerschicht (40) laminiert ist.

5. Die sauerstoffempfindliche Sonde (10) gemäß Anspruch 4, ferner umfassend eine Schicht aus einem Haftklebstoff (30) auf einer ersten Hauptoberfläche (40a) der strukturellen Trägerschicht (40), wobei sich der Haftklebstoff (30) zwischen der strukturellen Trägerschicht (40) und dem lumineszierenden Element (20) befindet.

6. Ein Verfahren zur Messung der Sauerstoffkonzentration in einem geschlossenen Raum, umfassend die Schritte:
(a) Erhalten einer sauerstoffempfindlichen Sonde (10) gemäß Anspruch 4 oder 5,
(b) Platzieren der Sonde (10) in dem geschlossenen Raum und
(c) Bestimmen der Sauerstoffkonzentration in dem geschlossenen Raum durch:
(i) Durchführen von Lumineszenzmessungen, indem (A) die Sonde (10) im Verlauf der Zeit wiederholt Anregungsstrahlung ausgesetzt wird und (B) die von der angeregten Sonde (10) emittierte Strahlung nach mindestens einigen der Bestrahlungen gemessen wird,
(ii) Messen des zeitlichen Abschnitts zwischen den Lumineszenzmessungen und
(iii) Umwandeln von mindestens einigen der gemessenen Emissionen in eine Sauerstoffkonzentration, basierend auf einem bekannten Umwandlungs algorithmus.

7. Ein Verfahren zur Überwachung von Änderungen der Sauerstoffkonzentration in einem geschlossenen Raum, umfassend die Schritte:
(a) Erhalten einer sauerstoffempfindlichen Sonde (10) gemäß Anspruch 4 oder 5,
(b) Platzieren der Sonde (10) in dem geschlossenen Raum,
(c) Bestimmen der Sauerstoffkonzentration in dem geschlossenen Raum im Verlauf der Zeit durch:
(i) Durchführen von Lumineszenzmessungen, indem (A) die Sonde (10) im Verlauf der Zeit wiederholt Anregungsstrahlung ausgesetzt wird und (B) die von der angeregten Sonde (10) emittierte Strahlung nach mindestens einigen der Bestrahlungen gemessen wird,
(ii) Messen des zeitlichen Abschnitts zwischen den Lumineszenzmessungen und
(iii) Umwandeln von mindestens einigen der gemessenen Emissionen in eine Sauerstoffkonzentration, basierend auf einem bekannten Umwandlungsalgorithmus und
(d) Protokollieren von mindestens einem von (i) mindestens zwei ermittelten Sauerstoffkonzentrationen und des Zeitintervalls zwischen diesen protokollierten Konzentrationen und (ii) einer Änderungsrate der Sauerstoffkonzentration innerhalb des geschlossenen Raums, berechnet aus den in Schritt (c) erhaltenen Daten.

8. Das Verfahren gemäß Anspruch 6 oder 7, wobei der geschlossene Raum eine Rückhaltekammer einer hermetisch versiegelten Verpackung ist.

9. Ein Verfahren zur Herstellung des lumineszierenden Elements (20) gemäß Anspruch 1, das mindestens die Schritte einschließt:
(a) Zubereitung eines Beschichtungscocktails, der den sauerstoffempfindlichen photolumineszierenden Tetrabenzoporphyrin-Farbstoff (21) und das sauerstoffdurchlässige hydrophobe Polymer in einem organischen Lösungsmittel enthält,
(b) Anwenden des Cocktails auf eine erste Hauptoberfläche des bindemittelfreien Glasfaser-Trägersubstrats (23) und
(c) Trocknen lassen des Cocktails, wobei auf dem bindemittelfreien Glasfaser-Trägersubstrat (23) eine Festkörper-Dünnfilmbeschichtung zur Bildung des lumineszierenden Elements (20) gebildet wird.

10. Das Verfahren gemäß Anspruch 9, wobei der Cocktail auf die erste Hauptoberfläche des bindemittelfreien Glasfaser-Trägersubstrats (23) durch Tauchen des bindemittelfreien Glasfaser-Trägersubstrats (23) in eine Bereitstellung des Cocktails aufgebracht wird.

11. Das Verfahren gemäß Anspruch 9, wobei die Konzentration des Polymers im organischen Lösungsmittel im Bereich von 0,1 bis 20% w/w liegt und das Verhältnis von Farbstoff:Polymer im Bereich von 1:20 bis 1:10.000 w/w liegt.

12. Ein Verfahren zur Herstellung einer photolumineszierenden sauerstoffempfindlichen Sonde (10), umfassend die Schritte:
(a) Herstellen eines lumineszierenden Elements (20) gemäß Anspruch 9 und
(b) Laminieren des lumineszierenden Elements (20) auf die erste Hauptoberfläche (40a) einer strukturellen Trägerschicht (40).

## Revendications

1. Elément luminescent sensible à l'oxygène (20) comprenant un substrat support en fibres de verre sans liant (23) portant un colorant photoluminescent sensible à l'oxygène de type tétrabenzoporphyrine (21) incrusté à l'intérieur d'une matrice polymère hydrophobe perméable à l'oxygène (22).

2. Elément luminescent (20) selon la revendication 1, dans lequel la matrice polymère hydrophobe perméable à l'oxygène est choisie dans le groupe constitué par le polystyrène, le polycarbonate, la polysulfone, et le poly(chlorure de vinyle).

3. Elément luminescent (20) selon la revendication 1, dans lequel le substrat support en fibres de verre (23) est une feuille ayant une épaisseur comprise entre 100 µm et 5 000 µm.

4. Sonde sensible à l'oxygène (10) comprenant l'élément luminescent (20) de l'une quelconque des revendications 1 à 3 stratifié sur une couche support structurelle (40).

5. Sonde sensible à l'oxygène (10) selon la revendication 4, comprenant en outre une couche d'un adhésif sensible à la pression (30) sur une première surface majeure (40a) de la couche support structurelle (40) de telle façon que la couche adhésive (30) soit prise en sandwich entre la couche support structurelle (40) et l'élément luminescent (20).

6. Méthode de mesure de la concentration d'oxygène à l'intérieur d'un espace fermé, comprenant les étapes suivantes :
(a) obtention d'une sonde sensible à l'oxygène (10) selon la revendication 4 ou 5,
(b) placement de la sonde (10) à l'intérieur de l'espace fermé, et
(c) détermination de la concentration d'oxygène à l'intérieur de l'espace fermé par :
(i) prise de mesures de luminescence par (A) exposition répétée de la sonde (10) à un rayonnement d'excitation au cours du temps, et (B) mesure du rayonnement émis par la sonde excitée (10) après au moins certaines des expositions,
(ii) mesure du passage du temps entre des mesures de luminescence, et
(iii) conversion d'au moins certaines des émissions mesurées en une concentration d'oxygène sur la base d'un algorithme de conversion connu.

7. Méthode de surveillance de changements de la concentration d'oxygène à l'intérieur d'un espace fermé, comprenant les étapes suivantes :
(a) obtention d'une sonde sensible à l'oxygène (10) selon la revendication 4 ou 5,
(b) placement de la sonde (10) à l'intérieur de l'espace fermé, et
(c) détermination de la concentration d'oxygène à l'intérieur de l'espace fermé au cours du temps par :
(i) prise de mesures de luminescence par (A) exposition répétée de la sonde (10) à un rayonnement d'excitation au cours du temps, et (B) mesure du rayonnement émis par la sonde excitée (10) après au moins certaines des expositions,
(ii) mesure du passage du temps entre des mesures de luminescence, et
(iii) conversion d'au moins certaines des émissions mesurées en une concentration d'oxygène sur la base d'un algorithme de conversion connu, et
(d) rapport d'au moins l'un parmi (i) au moins deux concentrations d'oxygène déterminées et l'intervalle de temps entre ces concentrations déterminées, et (ii) le taux de changement de la concentration d'oxygène à l'intérieur de l'espace fermé, calculée à partir de données obtenues dans l'étape (c).

8. Méthode selon la revendication 6 ou 7, dans laquelle l'espace fermé est une chambre de rétention d'un emballage scellé hermétiquement.

9. Méthode de préparation de l'élément luminescent (20) de la revendication 1, qui comprend au moins les étapes suivantes :
(a) préparation d'un cocktail de revêtement qui contient le colorant photoluminescent sensible à l'oxygène de type tétrabenzoporphyrine (21) et le polymère hydrophobe perméable à l'oxygène dans un solvant organique,
(b) application du cocktail à une première surface majeure du substrat support en fibres de verre sans liant (23), et
(c) séchage naturel du cocktail, en conséquence de quoi un revêtement en film mince à l'état solide est formé sur le substrat support en fibres de verre sans liant (23) pour former l'élément luminescent (20).

10. Méthode selon la revendication 9, dans laquelle le cocktail est appliqué à la première surface majeure du substrat support en fibres de verre sans liant (23) par immersion du substrat support en fibres de verre sans liant (23) dans une réserve du cocktail.

11. Méthode selon la revendication 9, dans laquelle la concentration du polymère dans le solvant organique est située dans la plage allant de 0,1 à 20 % en poids et le rapport colorant/polymère est situé dans la plage allant de 1/20 à 1/10 000 en poids.

12. Méthode de préparation d'une sonde sensible à l'oxygène photoluminescente (10), comprenant les étapes suivantes :
(a) préparation d'un élément luminescent (20) selon la revendication 9, et
(b) stratification de l'élément luminescent (20) sur la première surface majeure (40a) d'une couche support structurelle (40).
